# FASCICULE DE BREVET EUROPEEN

(11) **EP 0 352 188 B1**
(45) Date de publication et mention de la délivrance du brevet: **07.01.1993**
(21) Numéro de dépôt: 89402054.4
(22) Date de dépôt: 19.07.1989
(51) Int. Cl.: B01D 46/06

(54) **Châssis de support pour élément filtrant**
Stützrahmen für Filterelemente
Support frame for filter elements

(30) Priorité: 20.07.1988 FR 8809800
(43) Date de publication de la demande: 24.01.1990
(73) Titulaire: FRANCE DEPOUSSIERAGE INDUSTRIEL, F-93370 Montfermeil (FR)
(72) Inventeur: Touarin, Claude, F-93340 Le Raincy (FR)
(74) Mandataire: Boutin, Antoine

(56) Documents cités:
- EP-A- 0 207 847

## Description

La présente invention concerne les châssis de support destinés à recevoir des sacs filtrants enfilés sur ceux-ci et constituant avec eux autant d'éléments de filtration. Il s'agit donc de châssis, tels que celui décrit dans le brevet FR-A-2.584.304.

Un tel élément filtrant est destiné à être mis en batterie, avec d'autres éléments identiques, à l'intérieur d'un caisson de filtration et de dépoussiérage assurant une séparation entre de l'air à dépoussiérer présent à l'intérieur d'un local, ou d'une enceinte raccordée au caisson, et l'atmosphère extérieure ou une autre enceinte où l'air est refoulé, après avoir été aspiré à travers les éléments filtrants de ce caisson.

Le châssis prévu pour un tel élément filtrant est constitué par un cadre tubulaire de forme générale en U entre les extrémités duquel est disposé un conduit plat de sortie de l'air filtré, ainsi qu'une bride d'appui pour le montage de ce châssis dans l'une des ouvertures allongées d'une plaque de base servant de support à plusieurs châssis de ce genre. A l'intérieur de l'enceinte correspondante de filtration, cette plaque forme une barrière à l'air à filtrer de sorte que celui-ci doit pénétrer à l'intérieur des sacs filtrants portés par les châssis correspondants, pour ressortir à travers le conduit plat de chacun de ces châssis.

Pour le décolmatage des parois des sacs filtrants, il est prévu des moyens d'alimentation en air comprimé permettant d'envoyer de l'air sous pression à l'intérieur de chaque sac filtrant des le sens inverse du sens normal d'écoulement de l'air filtré. Pour améliorer et accroître encore les possibilités de décolmatage, les châssis pour sacs filtrants, qui font l'objet du brevet principal, comportent des ressorts disposés dans le sens longitudinal entre le conduit plat de sortie et l'extrémité opposée du cadre tubulaire d'entourage. Ainsi, lors de chaque injection d'air comprimé, il se produit non seulement une expansion des sacs filtrants, mais également la mise en résonnance mécanique de ces ressorts. En conséquence ceux-ci, par leurs vibrations, viennent battre les parois latérales des sacs filtrants en assurant un décolmatage particulièrement efficace de celles-ci.

Les châssis décrits dans le brevet FR 2.584.304 doivent être réalisés en différentes longueurs, en fonction des dimensions et caractéristiques des enceintes à l'intérieur desquelles ils sont installés. Ceci impose donc pour le fabricant de réaliser ces châssis "à la demande", en fonction des caractéristiques des enceintes correspondantes, ou bien de fabriquer à l'avance plusieurs séries de modèles correspondant à des longueurs différentes. Or l'une et l'autre de ces deux solutions présentent des inconvénients évidents. En effet dans le premier cas il est nécessaire de réaliser un outillage particulier pour chaque commande, cependant que dans le second cas le fabricant est astreint à réaliser à l'avance un nombre important de modèles différents qui doivent être stockés en attente.

Par ailleurs, lorsqu'un utilisateur a acquis une installation de dépoussiérage équipée de châssis d'une longueur déterminée, il est obligé de remplacer tous les châssis de celle-ci par des châssis plus grands s'il désire disposer d'une capacité accrue de dépoussiérage.

C'est pourquoi la présente invention a pour objet un châssis du même type mais qui est conçu de façon à éliminer ces inconvénients. A cet effet, ce châssis est constitué par trois parties complémentaires distinctes, à savoir :
- une première partie comportant le conduit plat de sortie de l'air filtré, ainsi que la bride d'appui du châssis, et deux tronçons de tube disposés contre les côtés du conduit plat et dont les extrémités, situées du côté opposé à l'ouverture de sortie de ce conduit, font saillie au delà du bord correspondant de celui-ci,
- une seconde partie formant l'extrémité opposée du châssis et qui est constituée par un tube coudé en U dont les branches latérales sont de courte longueur,
- une partie intermédiaire interchangeable constituée par deux tubes servant d'éléments de raccordement entre les branches latérales de l'extrémité en U et les tronçons de tube de la première partie.

Ainsi, pour réaliser un châssis de longueur plus au moins importante à partir des deux mêmes parties principales d'extrémité, il suffit de monter entre celles-ci des tubes intermédiaires ayant la longueur voulue. Le fabricant peut donc réaliser à l'avance une série de parties principales d'extrémité qui seront ainsi susceptibles d'être utilisées quelque soit la longueur choisie. Quant aux tubes intermédiaires, ils peuvent être coupés au dernier moment à la longueur voulue dans chaque cas, les sacs filtrants pouvant eux-mêmes être réalisés à la longueur de l'ensemble.

Un exemple de réalisation d'un châssis selon l'invention est décrit ci-dessous en référence au dessin annexé à simple titre indicatif, et sur lequel :

La figure 1 est une vue en perspective représentant les trois parties d'un châssis selon l'invention, et ce avant assemblage de celles-ci.

La figure 2 est une vue schématique en élévation, à une autre échelle, de deux châssis de deux longueurs différentes qui sont réalisés à partir des mêmes parties principales d'extrémité.

La figure 3 est une vue en perspective, avec arrachement partiel, d'un châssis selon l'invention équipant un caisson de filtration.

Le châssis selon l'invention est constitué par deux parties principales d'extrémité respectivement 1 et 2, entre lesquelles il est prévu une partie intermédiaire désignée par la référence générale 3.

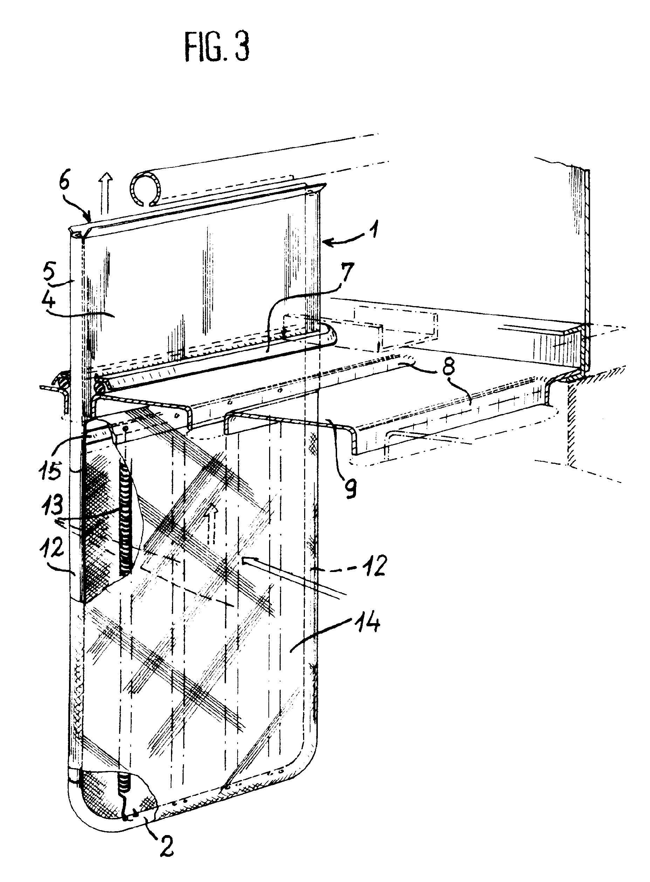

La première partie 1 comporte un conduit plat de sortie de l'air filtré, lequel est formé par deux plaques métalliques 4 disposées parallèlement entre deux tronçons de tube 5 constituant les côtés latéraux du conduit. Du côté opposé à l'ouverture 6 de sortie de l'air filtré, ce conduit plat 4-5 porte une bride d'appui 7 qui l'entoure. Cette bride est destinée à permettre le montage du châssis correspondant dans l'une des ouvertures allongées 8 d'une plaque de base 9 servant de support à plusieurs châssis du même genre (voir figure 3).

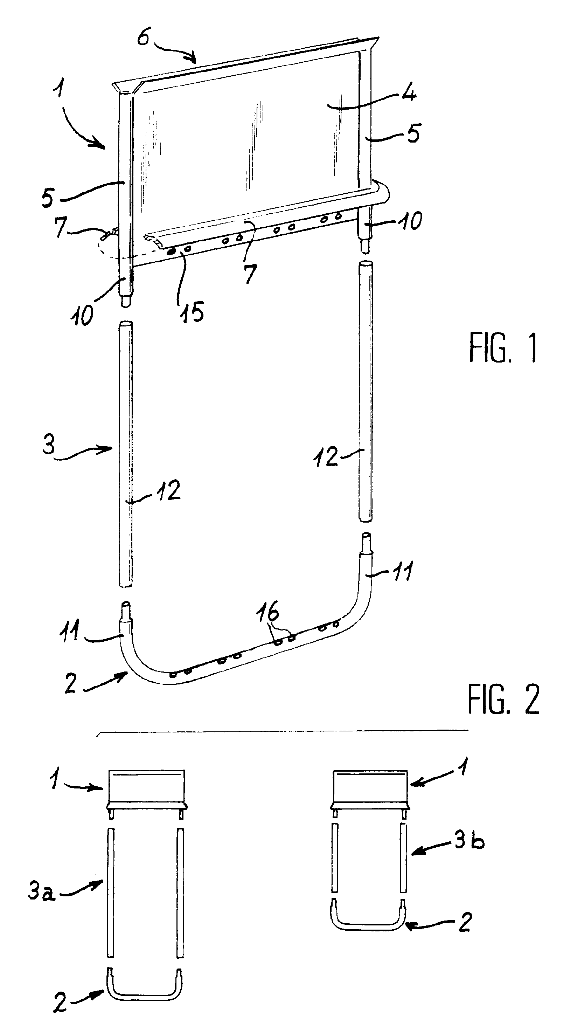

Ainsi qu'il apparait clairement sur la figure 1, les tronçons de tube 5, prévus sur chacun des côtés de la première partie 1, s'étendent au delà du bord du conduit plat qui est situé du côté opposé à l'ouverture de sortie 6. Les extrémités saillantes 10 de ces tronçons de tube se terminent par des embouts de diamètre plus restreint adaptés à recevoir des tubes de même diamètre que les deux tronçons 5.

Quant à la seconde partie principale du présent châssis, elle consiste simplement en un tube coudé en forme de U et dont les branches latérales 11 sont de courte longueur, cependant que la longueur de la branche centrale correspond à la largeur du conduit plat de la première partie 1 du châssis. Les extrémités des branches latérales de cette seconde partie se terminent par des embouts de diamètre restreint de même que les tronçons de tube 5.

Enfin, la partie intermédiaire 3 du présent châssis consiste simplement en deux tubes métalliques 12 de même diamètre que les tronçons de tube 5. Ces deux tubes sont destinés à servir d'éléments de raccordement entre ces tronçons de tube 5 et les branches latérales 11 du tube d'extrémité 2 de façon à constituer un cadre fermé.

Ainsi, à partir des deux parties principales d'extrémité 1 et 2, il est possible de réaliser des châssis de longueur plus ou moins importante. En effet il suffit pour cela de raccorder ces deux parties d'extrémité par des tubes intermédiaires 12 ayant la longueur voulue. Ceci est du reste illustré sur la figure 2 où sont représentés deux châssis de longueur très différentes réalisés avec les mêmes parties d'extrémité 1 et 2. Suivant le cas, celles-ci sont réunis par des tubes 3a de grande longueur ou des tubes 3b de très faible longueur.

De plus, le présent châssis comporte des ressorts, en l'occurrence des ressorts à boudin 13, qui sont destinés à assurer un décolmatage efficace des parois du sac filtrant 14 placé sur le présent châssis. Ces ressorts sont disposés dans le sens de la longueur entre le conduit plat 4-5 et l'extrémité opposée 2 du châssis. A cet effet, la première partie 1 comporte une traverse 15 présentant une série de trous pour l'accrochage de tels ressorts, d'autres trous similaires 16 étant ménagés dans le tube 2 de l'extrémité opposée du châssis.

En conséquence ce châssis présente les mêmes avantages que le châssis faisant l'objet du brevet FR-A-2.584.304. Cependant en plus, il comporte l'avantage de pouvoir être réalisé avec des longueurs différentes à partir de ceux pièces principales d'extrémité qui sont toujours identiques. Or il s'agit là d'un avantage extrêmement important aussi bien au point de vue économique que pratique. Ainsi en ne fabriquant que les parties extrêmes 1 et 2 des châssis qui sont toujours identiques, on obtient un abaissement des coûts de fabrication, de l'ordre de 10 à 15 %. De plus ceci permet une réduction importante des stocks entraînant une économie de 24 à 28 % sur les sommes immobilisées du fait de ces stocks. A ce sujet il convient de rappeler que les châssis des éléments filtrants du type en cause peuvent avoir les longueurs comprises entre 0,50 mètres et 2,50 mètres avec des variations de 250 mm d'une modèle à l'autre. Avec des châssis classiques d'un seul tenant, ceci implique donc pour les fabricants de réaliser à l'avance un stock considérable de modèles différents pour être en mesure de répondre aux demandes les plus diverses.

En dehors du fait qu'il est ainsi possible de réaliser initialement des châssis plus ou moins longs, la conception des châssis selon l'invention permet de modifier la longueur de châssis déjà existant de ce type. En effet dans un tel cas il suffit de remplacer les tubes intermédiaires 12 des châssis déjà existant par des tubes similaires de longueur différente. Un utilisateur disposant d'une installation équipée d'éléments filtrants d'une longueur déterminée peut donc facilement accroître la capacité de traitement de celle-ci en allongeant ces châssis filtrants par simple remplacement des tubes intermédiaires 12 par des tubes similaires de plus grande longueur.

Bien entendu, la longueur des sacs filtrants 16 doit être adaptée à celle des châssis. Il en est de même pour la longueur des ressorts 13. Cependant du fait même de l'élasticité de ces ressorts, un même type de ressort peut convenir pour des châssis ayant des longueurs différentes.

## Revendications

1. Châssis de support pour un sac filtrant (14) enfilé sur ce châssis et constituant avec lui un élément filtrant destiné à équiper un caisson de filtration, ce châssis comportant un cadre tubulaire en U entre les extrémités duquel est disposé un conduit plat (4) de sortie de l'air filtré, ainsi qu'une bride d'appui (7) pour le montage de ce châssis dans l'une des ouvertures allongées (8) d'une plaque de base (9) servant de support à plusieurs châssis de ce genre, caractérisé en ce que ce châssis est constitué par trois parties complémentaires distinctes, à savoir :
- une première partie (1) comportant le conduit plat (4) de sortie de l'air filtré, ainsi que la bride d'appui (7) du châssis, et deux tronçons de tube (5) disposés contre les côtés du conduit plat (4) et dont les extrémités (10), situées du côté opposé à l'ouverture de sortie de ce conduit, font saillie au-delà du bord correspondant de celui-ci,
- une seconde partie (2) formant l'extrémité opposée du châssis et qui est constituée par un tube coudé en U dont les branches latérales (11) sont de courte longueur,
- une partie intermédiaire interchangeable (3) constituée par deux tubes (12) servant d'éléments de raccordement entre les branches latérales (11) de l'extrémité (2) en U et les tronçons de tube (5) de la première partie (1), ces deux tubes (12) pouvant être remplacés par d'autres tubes de longueur différente pour réaliser un châssis de longueur plus ou moins important à partir des deux mêmes parties principales d'extrémité.

## Patentansprüche

1. Stützrahmen für einen auf diesem Stützrahmen aufgeschobenen Filterschlauch (14) zur Bildung eines Filterelements für einen Filtersenkkasten, wobei dieser Stützrahmen einen rohrförmigen Rahmen in U-Form aufweist, zwischen dessen Enden eine flache Austrittsleitungs (4) für die filtrierte Luft sowie ein Haltebügel (7) für die Montage dieses Stützrahmens in einer der langgestreckten Öffnungen einer Bodenplatte (9) angeordnet sind, die als Träger für mehrere Stützrahmen dieser Art dient, dadurch gekennzeichnet, daß der Stützrahmen aus drei aufeinander abgestimmten, einzelnen Teilen besteht:
- ein erster Teil (1), der die flache Austrittsleitung (4) für die filtrierte Luft sowie den Haltebügel (7) des Stützrahmens und zwei an den Seiten der flachen Austrittsleitung (4) angeordnete Rohrabschnitte (5) umfaßt, deren an der der Austrittsöffnung dieses Stützrahmens gegenüberliegenden Seite angeordnete Enden (10) über die entsprechende Kante des Stützrahmens vorstehen,
- ein zweiter Teil (2), der das entgegengesetzte Ende des Stützrahmens bildet und aus einem zu einem U gebogenen Rohr besteht, dessen laterale Arme (11) kurz ausgebildet sind,
- ein austauschbarer Mittelteil (3), der aus zwei Rohren (12) besteht, die als Verbindungselemente zwischen den lateralen Armen (11) des Endes des U-förmigen Teils (2) und den Rohrabschnitten (5) des ersten Teils (1) dienen, wobei diese zwei Rohre (12) durch andere Rohre verschiedener Länge ersetzt werden können, um ausgehend von den zwei selben Endteilen einen mehr oder weniger langen Stützrahmen zu erhalten.

## Claims

1. A support frame for a filtering bag (14) slipped over said frame and forming therewith a filtering element intended for the equipment of a filtering case, said frame comprising a tubular U-shaped structure between the ends of which is disposed a flattened duct (4) for the discharge of filtered air, as well as a supporting flange (7) for the mounting of said frame into one of the elongated openings (8) of a base plate (9) serving as a support for several frames of this kind,
**characterized** in that said frame is formed of three separate complementary portions, namely :
- a first portion (1) including the flattened duct (4) for the discharge of filtered air, as well as the supporting flange (7) of the frame, and two tube sections (5) disposed against the sides of the flattened duct (4), while the ends (10) of said sections situated on the side opposite to the outlet opening of said duct protrude beyond the corresponding edge of said duct,
- a second portion (2) forming the opposite end of the frame and being constituted by a tube bent into a U-shape, the lateral arms (11) thereof having a short length,
- an interchangeable intermediary portion (3) formed of two tubes (12) serving as joining elements between the lateral arms (11) of the U-shaped second portion (2) and the tube sections (5) of the first portion (1), said two tubes (12) being designed for being replaced with other tubes having a different length for obtaining a frame having a greater or shorter length, starting from the same two main end portions.
